# EUROPÄISCHE PATENTANMELDUNG

(11) **EP 0 980 746 A1**
(43) Veröffentlichungstag der Anmeldung: **23.02.2000**
(21) Anmeldenummer: 99111758.1
(22) Anmeldetag: 18.06.1999
(51) Int. Cl.: B29C 45/16, B60K 15/05

(54) **Verfahren zur Herstellung von Kunststofftankklappen für Kraftfahrzeuge**

(30) Priorität: 17.08.1998 DE 19837104
(71) Anmelder: Mittelhäuser, Bernhard, D-30900 Wedemark (DE)
(72) Erfinder: Mittelhäuser, Bernhard, D-30900 Wedemark (DE)
(74) Vertreter: Depmeyer, Lothar

(57) **Zusammenfassung**

Die Erfindung geht aus von einem Verfahren zur Herstellung von aus zähhartem Kunststoff bestehenden, an ihrer Innenseite (5) mit einem oder mehreren Vorsprüngen (6) versehenen Tankklappen (3) in einer Form, in der die Tankklappe (3) zusammen mit den Vorsprüngen (6) durch Einspritzen des Werkstoffes abgeformt wird. Zur Vermeidung von sog. Einfällen an der Aussenseite (1) der Tankklappe (3) wird erfindungsgemäss zunächst eine Innenschicht (9) mit den innen befindlichen Vorsprüngen (6) angeformt, worauf auf diese Innenschicht (9) eine Aussenschicht (10) aufgespritzt wird.

## Beschreibung

Die Erfindung betrifft ein Verfahren zur Herstellung von aus zähhartem Kunststoff bestehenden, an ihrer Innenseite mit einem oder mehreren Vorsprüngen versehenen Tankklappen in einer Form, in der die Tankklappe zusammen mit den Vorsprüngen durch Einspritzen des Werkstoffs abgeformt wird.

Tankklappen im Sinne der Erfindung sind die zum Abdecken des Kraftstoffeinfüllstutzens von Fahrzeugen dienenden Klappen, deren Aussenfläche praktisch in der Ebene der Aussenhaut des Fahrzeuges liegt und die an ihrer Innenseite mit einem oder mehreren Vorsprüngen, insb. mit einem angeformten Arm zum Anlenken am Fahrzeug, versehen sind.

Es versteht sich, dass die Aussenfläche der Tankklappen gleichmässig, regelmässig z.B. genau eben oder gekrümmt ausgeführt sein muss, weil Ungenauigkeiten der Aussenfläche unschön und sogar noch aus Entfernung erkennbar sind. Derartige Ungenauigkeiten lassen sich aber dann nicht vermeiden, wenn z.B durch Schrumpfvorgänge nach dem Abformen Einfälle entstehen.

Der Erfindung liegt die Aufgabe zugrunde, bei der Herstellung von Tankklappen der eingangs erwähnten Art die Einfälle praktisch unwirksam zu machen.

Zur Lösung dieser Aufgabe wird erfindungsgemäss zunächst eine Innenschicht mit den innen befindlichen Vorsprüngen abgeformt, worauf auf diese Innenschicht eine Aussenschicht aufgespritzt wird. Demgemäss ist der eigentliche Klappenkörper zweischichtig ausgeführt bzw. in zwei aufeinanderfolgenden Spritzvorgängen gefertigt.

Mit Vorteil sind die beiden Schichten zumindest von gleicher Wandstärke, wobei für jede Schicht eine Wandstärke von etwa 1.5 - 2 mm zweckmässig ist.

Der Vorschlag, Tankklappen durch zwei Spritzvorgänge zweischichtig auszuführen, eröffnet auch die Möglichkeit, den beiden Schichten unterschiedliche Eigenschaften z.B. im Hinblick auf ihre Farbgebung und ihre mechanischen bzw. chemischen Eigenschaften zu verleihen. So kann die Aussenschicht durchsichtig oder durchscheinend ausgeführt und in der Wagenfarbe eingefärbt sein. Ferner kann die Aussenschicht Fremdstoffbeimischungen z.B. Mineralfasern od. dgl. erhalten, um ihr besondere Festigkeitseigenschaften od. dgl. zu verleihen.

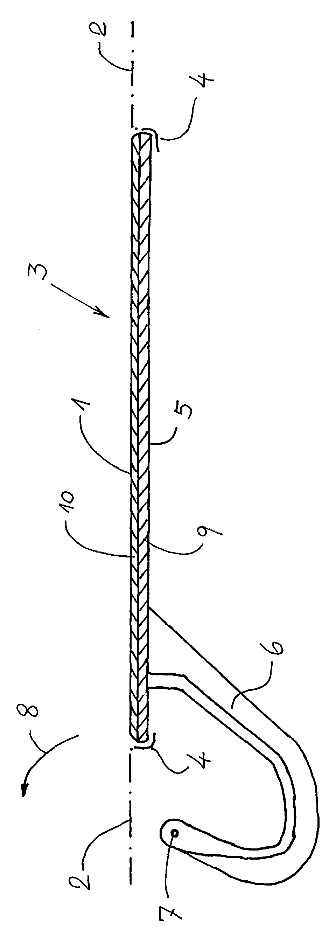

Weitere Einzelheiten der Erfindung werden anhand der Zeichnung erläutert, in der eine nach dem erfindungsgemässen Verfahren erstellte Tankklappe im Schnitt dargestellt ist, aus dem die Verfahrensschritte ohne weiteres erkennbar sind.

In der Zeichnung ist die fertige, eingebaute Tankklappe im geschlossenen Zustand dargestellt. Sie ist mit einem seiner Aussenfläche 1 praktisch in der Aussenfläche 2 des Fahrzeuges liegenden Klappenkörper 3 versehen, der im Grundriss meist rund gestaltet ist und mit seinen Rändern auf Absätzen 4 des Fahrzeuges aufliegt. Der Klappenkörper 3 hat an seiner Unterseite 5 einen angeformten, gerundeten Arm 6, mit dem der Klappenkörper 3 am Fahrzeug bei 7 angelenkt ist, um die Tankklappe im Sinne des Pfeiles 8 aufklappen und damit an den unterhalb des Klappenkörpers 3 befindlichen Tankstutzen gelangen zu können.

Die Tankklappe ist ein einheitlicher Formkörper, der aus einem zähharten Kunststoff gefertigt ist, und zwar durch Einspritzen des Werkstoffes in eine Form, allerdings erfolgt die erfindungsgemässe Herstellung in besonderer Weise, indem zunächst in einem ersten Einspritzvorgang die die Unterseite 5 aufweisende Schicht 9 zusammen mit dem Arm 6 abgespritzt bzw. ausgeformt wird, wobei im Bereich des Armes 6 in der Aussenfläche der Schicht 9 durchaus Einfälle bzw. sich beim Schrumpfvorgang ergebende Vertiefungen entstehen können. Nachdem ein aus den Teilen 6 und 9 bestehender Körper hergestellt und abgekühlt ist, wird vorzugsweise unter Nutzung der bereits verwendeten Einspritzform, jedoch mit einem anderen Kopfteil auf die Schicht 9 (Innenschicht) eine Schicht 10 mit der Aussenfläche 1 aufgebracht bzw. in einer ergänzten Form aufgespritzt, und zwar so, dass die beiden Schichten 9, 10 festhaftend miteinander verbunden sind und somit einen einheitlichen Sandwich-Körper bilden.

Für die Schichten 9, 10 können an sich beliebige Kunststoffe benutzt werden, die jedoch zähhart und festigkeitsmässig dem Betrieb eines Fahrzeuges gewachsen sind. Dabei kann für die Aussenschicht ein besonders abriebfester Werkstoff benutzt werden z.B. ein Kunststoff auf Polyamid-Basis. Es ist ferner möglich, dem Werkstoff für die Schicht 10 Fasern beizumischen, um die Festigkeitseigenschaften zu beeinflussen. Auch kann die Schicht 10 durch und durch im Sinne der Fahrzeugfarbe eingefärbt sein, auch unter Verwendung eines durchgefärbten durchsichtigen oder durchscheinenden Werkstoffes z.B. auf der Basis von Plexiglas

Die Erfindung schliesst nicht aus, dass die Schicht 10 mit ihrem Rand denjenigen der Schicht 9 ganz oder teilweise umschliesst. Dadurch kann z.B. eine besonders sorgfältige Farbgebung der Tankklappe erreicht werden, da nunmehr die ggfs. von aussen sichtbaren Ränder der Schicht 9 nicht mehr erkannt werden können.

## Patentansprüche

1. Verfahren zur Herstellung von aus zähhartem Kunststoff bestehenden, an ihrer Innenseite mit einem oder mehreren Vorsprüngen, insb. einem Schwenkarm versehenen Tankklappen in einer Form, in der die Tankklappe zusammen mit den Vorsprüngen durch Einspritzen abgeformt wird, dadurch gekennzeichnet, dass zunächst eine Innenschicht des Klappenkörpers zusammen mit den Vorsprüngen, und dann in einem gesonderten Arbeitsgang die die Aussenfläche der Tankklappe aufweisende Schicht (Aussenschicht) durch Einspritzen abgeformt wird.

2. Verfahren nach Anspruch 1, dadurch gekennzeichnet, dass der zweite Arbeitgang erst ausgeführt wird, wenn der Formling des ersten Arbeitsganges ( auf Raumtemperatur ) abgekühlt oder im wesentlichen abgekühlt ist.

3. Verfahren nach Anspruch 1, dadurch gekennzeichnet, dass der Formling des zweiten Arbeitsganges durch das Einspritzen mit dem Formling des ersten Arbeitganges festhaftend verbunden wird.

4. Verfahren nach Anspruch 1, dadurch gekennzeichnet, dass zur Durchführung des zweiten Arbeitsganges der im ersten Arbeitsgang erstellte Formling in seiner (Teil-) Form verbleibt.

5. Tankklappe hergestellt nach dem Verfahren gemäss Anspruch 1, dadurch gekennzeichnet, dass die beiden Schichten (Innenschicht 9, Aussenschicht 10) aus unterschiedlichen Werkstoffen bestehen, jedoch festhaftend miteinander verbunden sind.

6. Tankklappe hergestellt nach dem Verfahren gemäss Anspruch 1, dadurch gekennzeichnet, dass die Aussenschicht (10) der Farbe des Fahrzeuges entsprechend eingefärbt ist.

7. Tankklappe nach Anspruch 6, dadurch gekennzeichnet, dass der Grundwerkstoff für die Aussenschicht (10) durchsichtig oder durchscheinend ist.

8. Tankklappe hergestellt nach dem Verfahren nach Anspruch 1, dadurch gekennzeichnet, dass der Aussenschicht (10) Fasern beigemischt sind.

9. Tankklappe hergestellt nach dem Verfahren gemäss Anspruch 1, dadurch geknnzeichnet, dass die Wandstärken der beiden Schichten (9,10) praktisch einander entsprechen.

10. Tankklappe nach Anspruch 9, dadurch gekennzeichnet, dass die Wandstärken etwa 1.5 - 2 mm betragen.

11. Tankklappe hergestellt nach dem Verfahren gemäss Anspruch 1, dadurch gekennzeichnet, dass die seitliche Ausdehnung der beiden Schichten (9,10) zumindest in etwa der Quererstreckung des Klappenkörpers der Tankklappe entspricht.

12. Tankklappe hergestellt nach dem Verfahren gemäss Anspruch 1, dadurch gekennzeichnet, dass die Aussenschicht (10) des Klappenkörpers den Rand der Innenschicht (9) ganz oder teilweise umschliesst.
